# EUROPÄISCHE PATENTSCHRIFT

(11) **EP 1 660 912 B1**
(45) Veröffentlichungstag und Bekanntmachung des Hinweises auf die Patenterteilung: **12.02.2014**
(21) Anmeldenummer: 04766532.8
(22) Anmeldetag: 18.08.2004
(51) Int. Cl.: G01S 15/93, B60Q 1/48

(54) **VERFAHREN UND VORRICHTUNG ZUR BESTIMMUNG VON GRÖSSE UND POSITION EINER PARKLÜCKE**
METHOD AND DEVICE FOR DETERMINING THE SIZE AND POSITION OF A PARKING SPACE
PROCEDE ET DISPOSITIF POUR DETERMINER LA TAILLE ET LA POSITION D'UN EMPLACEMENT DE STATIONNEMENT

(30) Priorität: 28.08.2003 DE 10339645
(43) Veröffentlichungstag der Anmeldung: 31.05.2006
(73) Patentinhaber: ROBERT BOSCH GMBH, 70442 Stuttgart (DE)
(72) Erfinder: DANZ, Christian, 70469 Stuttgart (DE); SEITER, Michael, 71272 Renningen (DE)
(86) Internationale Anmeldenummer: PCT/EP2004/051832
(87) Internationale Veröffentlichungsnummer: WO 2005/024463

(56) Entgegenhaltungen:
- DE-A- 3 813 083
- DE-A- 10 146 712
- US-A- 5 714 928
- PATENT ABSTRACTS OF JAPAN Bd. 0184, Nr. 24 (M-1652), 9. August 1994 (1994-08-09) & JP 6 127318 A (NISSAN MOTOR CO LTD), 10. Mai 1994 (1994-05-10)

## Beschreibung

### Technisches Gebiet

Die Erfindung betrifft ein Verfahren und eine Vorrichtung mit den in den Oberbegriffen der Ansprüche 1 und 5 genannten Merkmalen.

### Stand der Technik

Die zunehmende Verkehrsdichte und verstärkte Bebauung freier Flächen engen den Verkehrsraum, insbesondere in Ballungszentren, kontinuierlich ein. Der zur Verfügung stehende Parkraum wird enger und die Suche nach einer geeigneten Parklücke belastet den Fahrer zusätzlich zum stetig steigenden Verkehrsaufkommen. Insbesondere beim rückwärtigen Einparken in eine Parklücke, ist es oft mit erheblichen Schwierigkeiten verbunden, die genaue Größe und Lage der Parklücke richtig einzuschätzen.

Zur Entlastung des Führers eines Fahrzeuges beim Einparken sind unterschiedlichste Vorrichtungen, wie zum Beispiel eine Parklückenvermessung oder ein semiautonomer oder ein vollautonomer Parkassistent, bekannt.

Das semiautonome Einparksystem berechnet, nachdem eine passende Parklücke gefunden wurde, in Abhängigkeit von Position und Größe der Parklücke die optimale Einfahrbahn. Mittels einer geeigneten Schnittstelle (optisch, akustisch oder haptisch) wird dem Fahrer die Information übermittelt, wie er zu lenken und Gas zu geben beziehungsweise zu bremsen hat, um optimal in die Parklücke hineinzufahren. Die Abweichungen zur Soll-Trajektorie werden vom Fahrer selbst oder automatisch ausgeglichen. Die Längsbewegung wird in der Regel vom Fahrer bestimmt. Das Lenken kann auch automatisch durchgeführt werden und der Fahrer übernimmt nur noch das Gas geben und Bremsen.

Um die Soll-Trajektorie der Einfahrbahn berechnen zu können, muss sowohl die Lage der Parklückenbegrenzungen mit einer hohen Genauigkeit bestimmt als auch eine sehr genaue Aussage über die Tiefe und die Form der Parklücke getroffen werden.

Eine Vorrichtung zur Bestimmung einer Parklückenbegrenzung ist aus US 5,701,122 bekannt. Zur Detektion des Abstandes eines festen Objektes werden optische Sensoren verwendet.

Aus der DE 101 467 12 A1 ist eine Einparkhilfsvorrichtung für Kraftfahrzeuge bekannt, bei der mindestens an einer Fahrzeugaußenseite ein Sender für ein zumindest annähernd senkrecht zur Fahrzeuglängsachse zum Fahrzeug abgestrahltes, auf einen kleinen Ausstrahlwinkelbereich beschränktes Sendesignal angeordnet ist, wobei das Sendesignal aus zwei Teilstrahlen, die eine annähernd flächenförmige Abstrahlcharakteristik besitzen, gebildet wird, wobei die beiden Flächen zumindest annähernd senkrecht zueinander stehen.

Aus der US 5,714,928 ist ein Kollisionsvermeidungssystem für Fahrzeuge bekannt, bei dem an einer Fahrzeugfront ein Lidar-Sensor für eine langreichweitige Hinderniserfassung und eine Ultraschallsensorbank mit mehreren Ultraschallsensoren für eine Nahweiterfassung vorgesehen sind.

Aus der JP 06-127318 Abstract ist eine Anordnung von zwei Ultraschallsensoren an einer vorderen und an einer hinteren Fahrzeugkante bekannt, die bei einer Vorbeifahrt an einer Parklücke die die Parklücke begrenzenden Hindernisse erfasst.

Aus der DE 38 13 083 A1 ist eine automatische Einparkvorrichtung für Kraftfahrzeuge bekannt, die zu einem Erleichtern eines Einparkvorgangs in paralleler oder rechtwinkliger Richtung vorgesehen ist. Hierbei erfassen Bewegungssensoren eine Bewegungsstrecke des Kraftfahrzeugs, während Hindernissensoren zum Ermitteln der Position der Hindernisse um einen Wagen herum vorgesehen sind.

Zur Überwindung der vorgenannten Nachteile ist es bekannt, Detektion beziehungsweise Abstandsmessung von Objekten in der Nähe eines Fahrzeuges mittels Ultraschallsensoren zu realisieren, da diese vergleichsweise preiswert sind. Nachteilig an den bekannten ultraschallbasierten systemen zur Parklückenvermessung ist jedoch deren geringe Genauigkeit, welche die praktische Anwendbarkeit erheblich einschränkt. Insbesondere bei einer hohen Vorbeifahrgeschwindigkeit (bis zu 30 km/h) an der zu vermessenden Parklücke entspricht die Genauigkeit der bekannten ultraschallbasierten Parklückenvermessungssysteme nicht den Anforderungen.

### Darstellung der Erfindung, Aufgabe, Lösung, Vorteile

Es ist Aufgabe der vorliegenden Erfindung, ein ultraschallbasiertes System zur Parklückenvermessung anzugeben, welches auch bei hoher Vorbeifahrgeschwindigkeit (bis zum 30 km/h) und hoher Parklückenerfassungstiefe (bis zu 5 m) genauer als die bekannten ultraschallbasierten Parklückenvermessungssysteme nach dem Stand der Technik arbeitet.

Diese Aufgabe wird erfindungsgemäß gelöst durch die Merkmale im kennzeichnenden Teil des Anspruchs 1 (Verfahrensanspruch) und des Anspruchs 5 (Vorrichtungsanspruch) im Zusammenwirken mit den Merkmalen im Oberbegriff.

Das erfindungsgemäße Verfahren ist durch folgende Verfahrensschritte gekennzeichnet:
- **Bestimmung der Breite einer Parklücke mittels eines ersten Ultraschallsensors mit einer ersten Empfindlichkeit und**
- Bestimmung der Tiefe einer Parklücke mittels eines zweiten Ultraschallsensors mit einer zweiten Empfindlichkeit, wobei die Empfindlichkeit des ersten Ultraschallsensors geringer als die Empfindlichkeit des zweiten Ultraschallsensors ist, so dass die Detektionsreicheseite des ersten Ultraschallsensors geringer als die Detektionsreicheseite des zweiten Ultraschallsensors ist.

Dadurch, dass die Parklücke mit Sensoren unterschiedlicher Empfindlichkeit vermessen wird, kann eine höhere Genauigkeit erreicht werden. In einer bevorzugten Ausführungsvariante beträgt der Detektionsbereich des ersten Ultraschallsensors 3 m und der Detektionsbereich des zweiten Ultraschallsensors 5 m.

Es ist insbesondere die Lage derjenigen Hindernisse, welche die Parklücke in ihrer Breite begrenzen und der Fahrbahnmitte am nächstgelegenen sind, von größter Bedeutung für die Berechnung der Soll-Trajektorie der Einfahrbahn. Deshalb ist es erfindungsgemäß vorgesehen, einen ersten Sensor mit relativ geringer Empfindlichkeit, vorzugsweise an der Front des Fahrzeuges, anzuordnen. Die Empfindlichkeit dieses ersten Sensors wird relativ gering eingestellt, so dass sich für diesen Sensor ein stark eingeschränktes Sichtfeld ergibt, wodurch eine sichere Lokalisierung der die Parklücke begrenzenden, der Fahrbahnmitte nächstgelegenen Hindernisse durchgeführt werden kann. Die Ausrichtung des ersten Sensors beträgt vorzugsweise 75° bis 80° zur Längsachse des Fahrzeuges, wodurch eine besonders gute Erfassung einer Heckfahrzeugecke eines parkenden Fahrzeuges, welches regelmäßig ein die Parklücke begrenzendes Hindernis darstellt, möglich ist.

Ein zweiter Sensor mit relativ hoher Empfindlichkeit, welcher vorzugsweise im Heck des Fahrzeuges angeordnet wird und einen Winkel von 90° zur Längsachse des Fahrzeuges aufweist, dient in erster Linie zur genauen Erkennung derjenigen die Parklücke begrenzenden Hindernisse, welche weiter von der Fahrbahnmitte entfernt sind, wie beispielsweise der Bordstein. Das Detektionsfeld dieses zweiten Sensors wird durch Anpassung der Empfindlichkeitsparameter so gewählt, dass eine hohe Detektionsreichweite erreicht wird, das heißt, der Sensor wird sehr empfindlich eingestellt Durch geeignete Wahl der Empfindlichkeitskennlinie im Bereich von 0,6 m bis 1,2 m kann sichergestellt werden, dass keine beziehungsweise nur wenige Bodenechos im Sensorsignal auftreten. Um eine gute Erfassung des die Parklückentiefe begrenzenden Hindernisses, welches in der Regel ein Bordstein ist, zu realisieren, wird der zweite Sensor vorzugsweise im Winkel von 90° zur Längsachse des Fahrzeuges ausgerichtet

Durch das Einstellen einer relativ geringen Empfindlichkeit für den ersten Sensor und einer höheren Empfindlichkeit für den zweiten Sensor wird es ebenfalls erreicht, dass der erste Sensor mit einer geringeren Wahrscheinlichkeit als der zweite Sensor Bodenechos erfasst. Im sich überlappenden Detektionsbereich beider Sensoren (bis zirka 3 m) kann durch Auswertung beider Abstandssignale auf Basis von Wegsignalgebern eine Filterung von Bodenechowerten durchgeführt werden, wodurch die Qualität der Parklückenvermessung deutlich erhöht werden kann. Dazu wird auf Basis der Auswertung eines Radimpulszählers eine Ortsbestimmung der Sensoren durchgeführt. Durch Speicherung der Daten des ersten Sensors kann, wenn die Daten des zweiten Sensors aufgenommen wurden, eine Filterung der Bodenechowerte durchgeführt werden. Voraussetzung für diese Filterung ist, dass reale Hindernisse durch den unempfindlicheren ersten Sensor detektiert werden können. Dies kann durch geeignete Wahl der Empfindlichkeitsparameter des ersten Sensors sichergestellt werden.

Nach einer besonders bevorzugten Ausgestaltung des Verfahrens ist vorgesehen, dass beim Querparken der Detektionsbereich des ersten Ultraschallsensors 3 m oder nahezu 3 m und der Detektionsbereich des zweiten Ultraschallsensors 5 m oder nahezu 5m beträgt und beim Längsparken der Detektionsbereich des ersten Ultraschallsensors 2 m oder nahezu 2 m und der Detektionsbereich des zweiten Ultraschallsensors 3,5 oder nahezu 3,5 m oder nahezu 3,5 m beträgt.

Eine erfindungsgemäße Vorrichtung zur Bestimmung von Größe und Position einer Parklücke ist durch mindestens zwei Ultraschallsensoren unterschiedlicher Empfindlichkeit gekennzeichnet. Vorzugsweise weisen die Ultraschallsensoren unterschiedliche Detektionsbereiche auf. In einer besonders bevorzugten Ausführungsvariante ist der erste Ultraschallsensor im seitlichen Frontbereich eines Fahrzeuges und der zweite Ultraschallsensor im seitlichen Heckbereich eines Fahrzeuges angeordnet.

In einer besonders bevorzugten Ausführungsvariante ist der erste Ultraschallsensor in einem Winkel zirka von 70° bis 80° zur Längsachse des Fahrzeuges und/oder der zweite Ultraschallsensor in einem Winkel von 90° oder nahezu 90° zur Längsachse des Fahrzeuges ausgerichtet.

Ein Vorteil der Erfindung besteht darin, dass die Vorrichtung sowohl an der rechten als auch an der linken Fahrzeugseite verwendbar ist. Auch eine beidseitige Anordnung ist möglich.

Weitere bevorzugte Ausgestaltungen der Erfindung ergeben sich aus den übrigen, in den Unteransprüchen genannten Merkmalen.

### Kurze Beschreibung der Zeichnungen

Nachstehend wird die Erfindung in Ausführungsbeispielen anhand der beigefügten Zeichnungen näher erläutert. Es zeigen:
Fig. 1a in schematischer Darstellung ein Fahrzeug mit erfindungsgemäßer Vorrichtung zur Bestimmung der Größe und der Position einer Parklücke im Anfang der Vorbeifahrt an der Parklücke;
Fig. 1b in schematischer Darstellung ein Fahrzeug mit erfindungsgemäßer Vorrichtung zur Bestimmung der Größe und der Position einer Parklücke während der Vorbeifahrt an der Parklücke;
Fig. 1c in schematischer Darstellung ein Fahrzeug mit erfindungsgemäßer Vorrichtung zur Bestimmung der Größe und der Position einer Parklücke am Ende der Vorbeifahrt an der Parklücke;

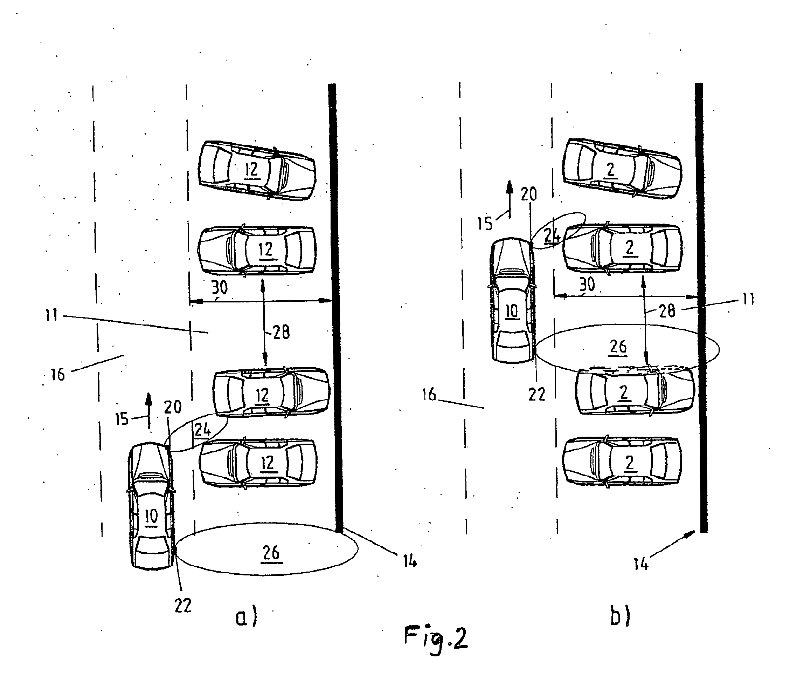

Fig. 2a in schematischer Darstellung ein Fahrzeug mit einer erfindungsgemäßen Vorrichtung zur Bestimmung von Größe und Position einer Parklücke vor der Vorbeifahrt vor einer quer ausgerichteten Parklücke und
Fig. 2b in schematischer Darstellung ein Fahrzeug mit einer erfindungsgemäßen Vorrichtung zur Bestimmung von Größe und Position einer Parklücke während der Vorbeifahrt vor einer quer ausgerichteten Parklücke.

### Bester Weg zur Ausfuhrung der Erfindung

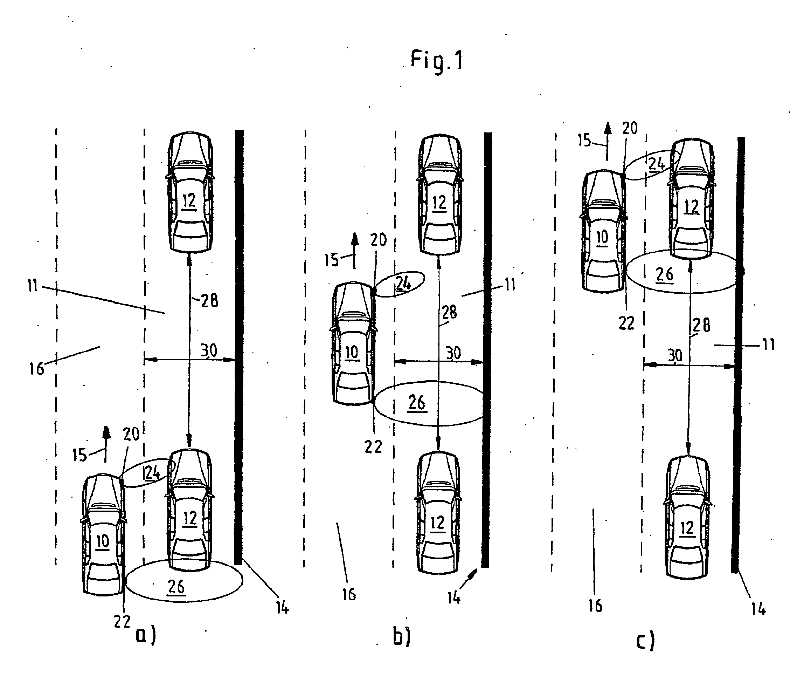

In Fig. 1a ist der Beginn eines rückwärts gerichteten Einparkvorganges eines Fahrzeuges 10 schematisch dargestellt. Das auf der Fahrspur 16 in Fahrtrichtung 15 fahrende Fahrzeug 10 benötigt eine Parklücke ausreichender Breite und Tiefe, um ordnungsgemäß einparken zu können. Zur Überprüfung, ob die Größe der Parklücke 11 für das Fahrzeug 10 ausreicht, wird die Breite 28 der Parklücke 11 sowie die Tiefe 30 der Parklücke 11 während der Vorbeifahrt des Fahrzeuges 10 an der Parklücke 11 bestimmt. Die Bestimmung der genauen Lage der Parklücke 11 sowie ihrer Abmaße (Breite 28 und Tiefe 30) muss mit hoher Genauigkeit erfolgen, um die entsprechenden Daten für eine autonome/semiautonome Einparkhilfe bereitstellen zu können. Werden beispielsweise die seitlichen Front- beziehungsweise Heckbereiche der die Breite 28 der Parklücke 11 begrenzenden Fahrzeuge 12 nicht richtig oder nicht mit ausreichender Genauigkeit erkannt, würde das Befahren der vom Einparkassistenten berechneten Soll-Trajektorie (Einparkbahn) möglicherweise eine Kollision mit einem der Fahrzeuge 12 zur Folge haben. Um eine möglichst genaue Lokalisierung von Lage und Größe der Parklücke 11 auf Basis von preiswerten Ultraschallsensoren vornehmen zu können, ist es erfingdungsgemäß vorzusehen, zwei Ultraschallsensoren 20, 22 am Fahrzeug 10 anzuordnen. Dabei weist der Ultraschallsensor 20 einen in seinen Ausmaßen geringeren Detektionsbereich 24 auf. Dieser Detektionsbereich 24 beträgt in etwa 3 m in seiner Längsausdehnung. Der erste Sensor 20 ist an der rechten Front des Fahrzeuges 10 in einem Winkel zirka von 70° bis 85° zur Längsachse des Fahrzeuges angeordnet. Der zweite Sensor 22 weist hingegen einen größeren Detektionsbereich 26 von zirka 5 m (Längsausdehnung) auf. Weiterhin ist der zweite Sensor 22 am Heck des Fahrzeuges 10 mit einer Ausrichtung von 90° zur Längsachse des Fahrzeuges angeordnet.

Bei der Verwendung mehrerer Sensoren 20, 22 unterschiedlicher Empfindlichkeit/Größe des Detektionsbereiches ist es trotz Verwendung preiswerter Ultraschallsensoren auch bei hohen Vorbeifahrgeschwindigkeiten (bis 30 km/h) gewährleistet, dass sowohl die Breite 28 der Parklücke 11 (begrenzende Objekte: Fahrzeuge 12) als auch die Tiefe 30 der Parklücke 11 (begrenzendes Objekt: Bordstein 14) mit einer hohen Genauigkeit erkannt werden können. Denn insbesondere der erste Sensor 20 mit seiner geringen Empfindlichkeit und seinem geringen Detektionsbereich 24 gewährleistet eine genaue Lokalisierung der die Breite 28 der Parklücke 11 begrenzenden Fahrzeuge 12, insbesondere der zur Parklücke 11 gerichteten linken Front- beziehungsweise Heck-partien der Fahrzeuge 12. Eine genaue Lokalisierung dieser Hindernisse (Fahrzeugecken) ist für das anschließende semiautonome/autonome Einparken besonders wichtig, da hier eine potentielle Gefahr des Zusammenstoßens beim Einparken besteht.

Der zweite Sensor 22 wird in erster Linie zur Erkennung des Bordsteins 14 verwendet. Er dient aber auch zur Verifikation des Parklückenlokalisierungsergebnisses des ersten Sensors 20.

Das Detektionsfeld 24 des ersten Sensors 20 wird durch Wahl der Wiederholrate der Detektion, durch die Wahl des Topfes des Sensors und durch Auspassung der Empfindlichkeitsparameter so gewählt, dass eine sehr genaue Lokalisierung der nächstgelegenen Fahrzeug- beziehungsweise Hindernisecke möglich ist, das heißt, die Empfindlichkeit des Sensors wird relativ gering eingestellt, so dass sich ein stark eingeschränktes Sichtfeld des Sensors ergibt. Somit kann eine sichere Ecken- beziehungsweise Hindernislokalisierung durchgeführt werden. Die Ausrichtung des ersten Sensors 20 beträgt üblicherweise aufgrund der Stoßfängergeometrie vorzugsweise zirka 75° bis 80° zur Längsachse des Fahrzeuges 10, so dass eine besonders gute Erfassung des Heckbereiches des nach der Vorbeifahrt an der Parklücke 11 passierten Fahrzeuges 12 möglich ist.

Das Detektionsfeld 26 des zweiten Sensors 22 wird durch Anpassung der Empfindlichkeitsparameter so gewählt, dass eine hohe Detektionsreichweite erreicht wird, das heißt, der Sensor wird sehr empfindlich eingestellt. Der zweite Sensor 22 dient somit in erster Linie zur Erfassung des Bordsteins 14 von Quer- und Längsparklücken. Durch geeignete Wahl der Empfindlichkeitskennlinie im Bereich von 0,6 m bis 1,2m wird sichergestellt, dass kein beziehungsweise nur wenig Bodenecho auftritt. Um eine gute Erfassung des Bordsteins 14 zu erreichen, ist der Hecksensor vorzugsweise im Winkel von 90° ausgerichtet. Zusätzlich zu dieser Funktionalität wird der zweite Sensor 22 zur Verbesserung der Eckenlokalisierung für die Parklückenlängenvermessung eingesetzt

Wie in Fig. 1b und 1c schematisch dargestellt ist, kann durch die Sensoren 20, 22 mit den unterschiedlichen Detektionsbereichen 24 und 26 eine genaue Lokalisierung sowohl der Fahrzeuge 12, welche als die Breite 28 der Parklücke 11 begrenzende Objekte fungieren, als auch des Bordsteins 14, welcher als die Tiefe 30 der Parklücke 11 begrenzendes Objekt fungiert, mit hoher Genauigkeit realisiert werden. Nach der Vorbeifahrt des Fahrzeuges 10 an der Parklücke 11 stehen somit einem semiautonomen/autonomen Parkassistent oder einem sonstigen informationsverarbeitenden System sehr genaue Informationen sowohl über die Lage als auch über die Größe der Parklücke 11 zur Verfügung. Erst durch diese genauen Informationen, insbesondere durch die Lage der Ecken der Fahrzeuge 12, kann die entsprechende Soll-Trajektorie für den Einparkvorgang berechnet werden.

Durch das Einstellen einer geringeren Empfindlichkeit für den ersten Sensor 20 und einer höheren Empfindlichkeit für den zweiten Sensor 22 wird es ebenfalls erreicht, dass der erste Sensor 20 mit einer geringeren Wahrscheinlichkeit Bodenechos erfasst, als der zweite Sensor 22. Im sich überlappenden Detektionsbereich beider Sensoren (bis zirka 3 m) kann durch Auswertung beider Abstandssignale auf Basis eines Wegsignalgebers eine Filterung von Bodenechowerten durchgeführt werden. Dazu wird auf Basis der Auswertung eines Radimpulszählers eine Ortsbestimmung der Sensoren durchgeführt.

Durch Speicherung der Daten des ersten Sensors 20 kann, wenn die Daten des zweiten Sensors 22 aufgenommen wurden, eine Filterung der Bodenechowerte durchgeführt werden. Prämisse für dieses Vorgehen ist, dass reale Hindernisse (Fahrzeuge 12) durch den unempfindlicheren Sensor 20 detektiert werden können. Dies kann durch geeignete Wahl der Empfindlichkeitsparameter des ersten Sensors 20 sichergestellt werden.

Die Erfindung ist nicht beschränkt auf die hier dargestellten Ausführungsbeispiele, vielmehr ist es möglich, durch Kombination und Modifikation der genannten Mittel und Merkmale weitere Ausführungsvarianten zu realisieren, ohne den Rahmen der Erfindung zu verlassen.

## Patentansprüche

1. Verfahren zur Bestimmung von Größe und Position einer Parklücke in Relation zur Position eines Fahrzeuges während der Vorbeifahrt des Fahrzeuges an der Parklücke, wobei die Parklücke eine Ausdehnung längs zur Fahrbahn (Breite) und eine Ausdehnung quer zur Fahrbahn (Tiefe) aufweist, **dadurch gekennzeichnet, dass** die Breite (28) der Parklücke (11) mittels eines ersten Ultraschallsensors (20) mit einer ersten Detektionsreichweite und die Tiefe (30) der Parklücke (11) mittels eines zweiten Ultraschallsensors (22) mit einer zweiten Detektionsreichweite bestimmt wird, wobei die Empfindlichkeit des ersten Ultraschallsensors (20) geringer als die Empfindlichkeit des zweiten Ultraschallsensors (22) ist, so dass die Detektionsreichweite des ersten Ultraschallsensors (20) geringer als die Detektionsreichweite des zweiten Ultraschallsensors (22) ist.

2. Verfahren nach Anspruch 1, **dadurch gekennzeichnet, dass** der erste Ultraschallsensor (20) in einem Winkel von zirka 70° bis 80° zur Längsachse des Fahrzeuges (10) ausgerichtet wird und/oder dass der zweite Ultraschallsensor (22) in einem Winkel von 90° oder einem Winkel von nahezu 90° zur Längsachse des Fahrzeuges (10) ausgerichtet wird.

3. Verfahren nach einem der vorhergehenden Ansprüche, **dadurch gekennzeichnet, dass** die Breite (28) der Parklücke (11) zusätzlich mittels des zweiten Ultraschallsensors (22) bestimmt wird und das Ergebnis mit dem Ergebnis der Bestimmung der Breite (28) der Parklücke (11) mittels des ersten Ultraschallsensors (20) abgeglichen wird.

4. Verfahren nach einem der vorhergehenden Ansprüche, **dadurch gekennzeichnet, dass** eine Filterung von Bodenecho-Signalen für das Signal des zweiten Ultraschallsensors (22) durch Vergleich mit dem Signal des ersten Ultraschallsensors (20) im überlappenden Detektionsbereich beider Sensoren (20, 22) erfolgt.

5. Vorrichtung zur Bestimmung von Größe und Position einer Parklücke in Relation zur Position eines Fahrzeuges während der Vorbeifahrt des Fahrzeuges an der Parklücke, wobei die Parklücke eine Ausdehnung längs zur Fahrbahn (Breite) und eine Ausdehnung quer zur Fahrbahn (Tiefe) aufweist, mit Mitteln zur Abstandsmessung von Objekten in Relation zum Fahrzeug und Mitteln zur Auswertung der gemessenen Abstände, **gekennzeichnet durch** mindestens zwei Ultraschallsensoren (20, 22) unterschiedlicher Detektionsreichweite, wobei die Empfindlichkeit eines ersten Ultraschallsensors (20) geringer als die Empfindlichkeit eines zweiten Ultraschallsensors (22) ist, so dass die Detektionsreichweite des ersten Ultraschallsensors (20) geringer als die Detektionsreichweite des zweiten Ultraschallsensors (22) ist, wobei die Vorrichtung ausgebildet ist die Breite (28) der Parklücke (11) mittels des ersten Ultraschallsensors (20) und die Tiefe (30) der Parklücke (11) mittels des zweiten Ultraschallsensors (22) zu bestimmen.

6. Vorrichtung nach Anspruch 5, **dadurch gekennzeichnet, dass** ein erster Ultraschallsensor (20) im seitlichen Frontbereich des Fahrzeuges (10) und ein zweiter Ultraschallsensor (22) im seitlichen Heckbereich des Fahrzeuges (10) angeordnet ist.

7. Vorrichtung nach Anspruch 9, **dadurch gekennzeichnet, dass** der erste Ultraschallsensor (20) in einem Winkel von zirka 70° bis 80° zur Längsachse des Fahrzeuges (10) und/oder der zweite Ultraschallsensor (22) in einem Winkel von 90° oder nahezu 90° zur Längsachse des Fahrzeuges (10) ausgerichtet ist.

## Claims

1. Method for determining the size and position of a parking space in relation to the position of a vehicle while the vehicle is driving past the parking space, wherein the parking space has an extent longitudinally with respect to the carriageway (width) and an extent transversely with respect to the carriageway (depth), **characterized in that** width (28) of the parking space (11) is determined by means of a first ultrasonic sensor (20) with a first detection range, and the depth (30) of the parking space (11) is determined by means of a second ultrasonic sensor (22) with a second detection range, wherein the sensitivity of the first ultrasonic sensor (20) is less than the sensitivity of the second ultrasonic sensor (22), with the result that the detection range of the first ultrasonic sensor (20) is less than the detection range of the second ultrasonic sensor (22).

2. Method according to Claim 1, **characterized in that** the first ultrasonic sensor (20) is oriented at an angle of approximately 70° to 80° with respect to the longitudinal axis of the vehicle (10), and/or **in that** the second ultrasonic sensor (22) is oriented at an angle of 90° or an angle of almost 90° with respect to the longitudinal axis of the vehicle (10).

3. Method according to one of the preceding claims, **characterized in that** the width (28) of the parking space (11) is additionally determined by means of the second ultrasonic sensor (22), and the result is compared with the result of the determination of the width (28) of the parking space (11) by means of the first ultrasonic sensor (20).

4. Method according to one of the preceding claims, **characterized in that** ground echo signals for the signal of the second ultrasonic sensor (22) are filtered by comparison with the signal of the first ultrasonic sensor (20) in the overlapping detection range of the two sensors (20, 22).

5. Device for determining the size and position of a parking space in relation to the position of a vehicle while the vehicle is driving past the parking space, wherein the parking space has an extent longitudinally with respect to the carriageway (width) and an extent transversely with respect to the carriageway (depth), having means for measuring the distance of objects in relation to the vehicle and means for evaluating the measured distances, **characterized by** at least two ultrasonic sensors (20, 22) with different detection ranges, wherein the sensitivity of a first ultrasonic sensor (20) is less than the sensitivity of a second ultrasonic sensor (22), with the result that the detection range of the first ultrasonic sensor (20) is less than the detection range of the second ultrasonic sensor (22), wherein the device is designed to determine the width (28) of the parking space (11) by means of the first ultrasonic sensor (20) and the depth (30) of the parking space (11) by means of the second ultrasonic sensor (22).

6. Device according to Claim 5, **characterized in that** a first ultrasonic sensor (20) is arranged in the lateral front region of the vehicle (10), and a second ultrasonic sensor (22) is arranged in the lateral rear region of the vehicle (10).

7. Device according to Claim 9, **characterized in that** the first ultrasonic sensor (20) is oriented at an angle of approximately 70° to 80° with respect to the longitudinal axis of the vehicle (10), and/or the second ultrasonic sensor (22) is oriented at an angle of 90° or almost 90° with respect to the longitudinal axis of the vehicle (10).

## Revendications

1. Procédé de détermination de la taille et de la position d'un emplacement de stationnement par rapport à la position d'un véhicule pendant le passage du véhicule à côté de l'emplacement de stationnement, l'emplacement de stationnement présentant une extension le long de la voie de circulation (largeur) et une extension transversalement par rapport à la voie de circulation (profondeur), **caractérisé en ce que** la largeur (28) de l'emplacement de stationnement (11) est déterminée au moyen d'un premier détecteur à ultrasons (20) ayant une première portée de détection et la profondeur (30) de l'emplacement de stationnement (11) est déterminée au moyen d'un deuxième détecteur à ultrasons (22) ayant une deuxième portée de détection, la sensibilité du premier détecteur à ultrasons (20) étant inférieure à la sensibilité du deuxième détecteur à ultrasons (22), de sorte que la portée de détection du premier détecteur à ultrasons (20) est inférieure à la portée de détection du deuxième détecteur à ultrasons (22).

2. Procédé selon la revendication 1, **caractérisé en ce que** le premier détecteur à ultrasons (20) est orienté selon un angle d'environ 70° à 80° par rapport à l'axe longitudinal du véhicule (10) et/ou **en ce que** le deuxième détecteur à ultrasons (22) est orienté selon un angle de 90° ou selon un angle proche de 90° par rapport à l'axe longitudinal du véhicule (10).

3. Procédé selon l'une des revendications précédentes, **caractérisé en ce que** la largeur (28) de l'emplacement de stationnement (11) est en plus déterminée au moyen du deuxième détecteur à ultrasons (22) et le résultat est comparé avec le résultat de la détermination de la largeur (28) de l'emplacement de stationnement (11) au moyen du premier détecteur à ultrasons (20).

4. Procédé selon l'une des revendications précédentes, **caractérisé en ce qu'**un filtrage des signaux d'écho du sol est effectué pour le signal du deuxième détecteur à ultrasons (22) par comparaison avec le signal du premier détecteur à ultrasons (20) dans la zone de détection se chevauchant des deux détecteurs (20, 22).

5. Dispositif de détermination de la taille et de la position d'un emplacement de stationnement par rapport à la position d'un véhicule pendant le passage du véhicule à côté de l'emplacement de stationnement, l'emplacement de stationnement présentant une extension le long de la voie de circulation (largeur) et une extension transversalement par rapport à la voie de circulation (profondeur), comprenant des moyens pour mesurer la distance d'objets par rapport au véhicule et des moyens pour interpréter les distances mesurées, **caractérisé par** au moins deux détecteurs à ultrasons (20, 22) ayant des portées de détection différentes, la sensibilité d'un premier détecteur à ultrasons (20) étant inférieure à la sensibilité d'un deuxième détecteur à ultrasons (22), de sorte que la portée de détection du premier détecteur à ultrasons (20) est inférieure à la portée de détection du deuxième détecteur à ultrasons (22), le dispositif étant configuré pour déterminer la largeur (28) de l'emplacement de stationnement (11) au moyen du premier détecteur à ultrasons (20) et la profondeur (30) de l'emplacement de stationnement (11) au moyen du deuxième détecteur à ultrasons (22).

6. Dispositif selon la revendication 5, **caractérisé en ce qu'**un premier détecteur à ultrasons (20) est disposé dans la zone avant latérale du véhicule (10) et un deuxième détecteur à ultrasons (22) est disposé dans la zone arrière latérale du véhicule (10).

7. Dispositif selon la revendication 9, **caractérisé en ce que** le premier détecteur à ultrasons (20) est orienté selon un angle d'environ 70° à 80° par rapport à l'axe longitudinal du véhicule (10) et/ou le deuxième détecteur à ultrasons (22) est orienté selon un angle de 90° ou proche de 90° par rapport à l'axe longitudinal du véhicule (10).
